# EUROPÄISCHE PATENTANMELDUNG

(11) **EP 0 696 703 A1**
(43) Veröffentlichungstag der Anmeldung: **14.02.1996**
(21) Anmeldenummer: 95112195.3
(22) Anmeldetag: 03.08.1995
(51) Int. Cl.: F21M 3/00, B60Q 1/00, B60Q 1/04

(54) **Scheinwerfer für Fahrzeuge**

(30) Priorität: 11.08.1994 DE 4428438
(71) Anmelder: Hella KG Hueck & Co., D-59552 Lippstadt (DE)
(72) Erfinder: Brummel, Reinhold, D-59609 Anröchte (DE); Döring, Bertholt, D-59457 Werl (DE); Niedenzu, Thomas, D-59302 Oelde (DE)

(57) **Zusammenfassung**

Der Scheinwerfer für Fahrzeuge weist ein topfförmiges Gehäuse (1) auf, welches an seiner vorderen Seite durch eine lichtdurchlässige Abschlußscheibe (2) abgeschlossen ist. In den von der Abschlußscheibe (2) und dem Gehäuse (1) gebildete Innenraum des Scheinwerfers ist ein Reflektor (4) eingesetzt. Eine Blende (5) deckt zumindest einen Teilbereich zwischen der Abschlußscheibe (2) und dem Reflektor (1) ab und ist zumindest in einem Abschnitt von einem zum Inneren des Scheinwerfers eingezogen verlaufenden äußeren Seitenwandabschnitt (6) des den Reflektor (4) aufnehmenden Gehäuses (1) gebildet.

## Beschreibung

Die Erfindung betrifft einen Scheinwerfer für Fahrzeuge mit einem topfförmigen Gehäuse, mit einer lichtdurchlässigen Abschlußscheibe, welche auf den vorderen Rand der Seitenwand des Gehäuses aufgesetzt ist, mit einem in das topfförmige Gehäuse eingesetzten Reflektor und mit einer Blende, welche zumindest einen Teilbereich zwischen Abschlußscheibe und Reflektor abdeckt.

Aus der EP 0 054 444 sind zwei Scheinwerfer für Fahrzeuge bekanntgeworden, welche im wesentlichen aus einem aus Kunststoff hergestellten topfförmigen Gehäuse einer die offene Vorderseite des topfförmigen Gehäuses abschließenden lichtdurchlässigen schalenförmigen Abschlußscheibe, einem in das Innere des Scheinwerfers eingesetzten verstellbaren Reflektor und einer zwischen Abschlußscheibe und dem Reflektor verlaufenden Blende bestehen. Die Blende ist ein an den vorderen Rand des topfförmigen Gehäuses angebrachter Kragen, welcher sich in das Innere der schalenförmigen Abschlußscheibe hineinerstreckt und zu seinem freien Ende hin zum vorderen Rand des Reflektors hin verläuft. Bei einem der Scheinwerfer ist es sehr vorteilhaft, daß der Kragen einstückig mit dem Gehäuse ausgeführt ist, jedoch muß die Innenseite des Kragens durch eine rückwärtige Gehäuseöffnung hindurch entformt werden. Deswegen ist das topfförmige Gehäuse zylinderförmig gestaltet und der gesamte Boden des Gehäuses ist von einem auf die Seitenwand des Gehäuses aufgesetzten Deckel gebildet, welcher eine zentral liegende Öffnung aufweist, durch welche eine in den Reflektor eingesetzte Lampe zu gänglich ist. Das Gehäuse kann wegen seiner zylinderförmigen Seitenwand den Reflektor nicht eng umgeben und kann dann wegen den oftmals sehr engen Platzverhältnisse in der Kraftfahrzeugkarosserie zu groß bauen. Diese Nachteile sind bei dem anderen Scheinwerfer beseitigt, und zwar durch die Ausbildung des Kragens als separates Teil. Hierbei kann die gesamte Innenseite des topfförmigen Gehäuses durch die geöffnete Vorderseite des Gehäuses hindurch entformt werden und somit kann das Gehäuse den Reflektor eng umgeben und eine kleinere Gehäuseöffnung aufweisen. Der Kragen muß, da er ein separates Teil ist, zusätzlich hergestellt und montiert werden.

Aufgabe der Erfindung ist es, den im Oberbegriff des Anspruchs 1 beschriebenen Scheinwerfer für Fahrzeuge derart zu gestalten, daß die Blende, auch wenn ein Flächenabschnitt der Blende nicht durch eine rückwärtige Gehäuseöffnung und die offene Vorderseite des Gehäuses hindurch entformbar ist, einstückig mit dem Gehäuse ausgeführt werden kann. Diese Aufgabe wird nach der Erfindung dadurch gelöst, daß zumindest ein Abschnitt der Blende von einem zum Inneren des Scheinwerfers hin eingezogen verlaufenden äußeren Seitenwandabschnitt des den Reflektor aufnehmenden Gehäuses gebildet ist. Hierbei trägt der äußere Seitenwandabschnitt des Gehäuses mit dem als Blende dienenden Abschnitt die Abschlußscheibe an seinem freien Rand. Außerdem kann die Blende beliebig breit ausgeführt werden. Je breiter die Blende ausgeführt ist und um so tiefer der äußere Seitenwandabschnitt zum Scheinwerfer hin eingezogen ist, um so kleiner ist der Innenraum des Scheinwerfers. Dadurch kann der eingezogen verlaufende Seitenwandabschnitt eine so breite Außenrinne aufweisen, daß in die Rinne Karosserieteile und/oder Befestigungselemente des Scheinwerfers hineinragen können. Ferner ist zur Herstellung des Gehäuses weniger Werkstoff notwendig, da die Blende von der äußeren Seitenwand des Gehäuses selbst gebildet ist. Zudem ist das Gehäuse an seinem vorderen freien Rand wegen dem eingezogen verlaufenden äußeren Seitenwandabschnitt sehr verwindungssteif und somit muß die auf das Gehäuse aufgesetzte Abschlußscheibe nicht zur Verwindungssteifigkeit des Scheinwerfers beitragen und kann aus dem dünnwandigen Kunststoff bestehen.

Bei einem Scheinwerfer mit einem tiefen Gehäuse ist es vorteilhaft, wenn der eingezogene Wandabschnitt des Gehäuses den vorderen Rand des Reflektors in Lichtaustrittsrichtung überragt und quer zur Lichtaustrittsrichtung zum Inneren des Scheinwerfers hin eingezogen verläuft und mit einem zum Inneren des Scheinwerfers hin gerichteten ersten Flächenabschnitt annähernd bündig in die an ihn angrenzende Innenfläche des Reflektors übergeht. Bei einer solchen Ausführungsform kann die Blende auch einen sehr großen Abstand zwischen der Abschlußscheibe und dem Reflektor abdecken.

In diesem Zusammenhang ist es weiterhin vorteilhaft, wenn der eingezogene Seitenwandabschnitt mit einem zum Inneren des Scheinwerfers hin gerichteten zweiten Flächenabschnitt der Rückseite des Scheinwerfers zugewandt ist und in einer durch die Vorderseite des Gehäuses hindurchgehenden Fläche liegt. Bei einer solchen Ausgestaltung kann der erste und zweite Flächenabschnitt der Blende durch die die Innenseite des Gehäuses formende Werkzeughälfte entformt werden, ohne das zusätzliche verstellbare Werkzeugteile notwendig sind. Die äußeren Flächenabschnitte des eingezogenen äußeren Seitenwandabschnittes können problemlos durch ein die Außenseite des topfförmigen Gehäuses formendes Werkzeugteil entformt werden.

Der die Abschlußscheibe aufnehmende freie Rand der Seitenwand des Gehäuses kann in vorteilhafter Art und Weise durch die Blende abgeschattet sein, wenn sie von einem zur Vorderseite der Abschlußscheibe hin eingezogen verlaufenden äußeren Seitenwandabschnitt des Gehäuses gebildet ist und einen zur Vorderseite des Scheinwerfers hin gerichteten dritten Flächenabschnitt aufweist. In diesem Zusammenhang ist es weiterhin vorteilhaft, wenn der dritte Flächenabschnitt bündig in einen vierten Flächenabschnitt eines an den vorderen Rand der Seitenwand des Gehäuses angeformten Kragens übergeht. Hierbei besteht durch den dritten und vierten Flächenabschnitt eine den Reflektor umgebende ringförmige Blende.

Bei einem Scheinwerfer, bei welchem die Abschlußscheibe mit ihrer Vorderseite zur Rückseite des Scheinwerfers schräg nach oben hin verläuft und zu einer seitlichen Seite des Scheinwerfers schräg zur Rückseite des Scheinwerfers hin verläuft, ist es weiterhin vorteilhaft, wenn der eingezogene äußere Seitenwandabschnitt in die untere und/oder zumindest in eine seitliche Seitenwand des Gehäuses angebracht ist. Bei einem solchen Scheinwerfer ist die von einem eingezogenen äußeren Seitenwandabschnitt gebildete Blende auf ihrer Innenseite problemlos von der Werkzeughälfte entformbar, welche die Innenseite des Gehäuses formt. Auch der Kragen ist von dieser Werkzeughälfte entformbar, wenn der Kragen an den vorderen Rand der oberen Seitenwand des Gehäuses angeformt ist und mit seinem freien Randabschnitt auf den gegenüberliegenden vorderen Rand des Gehäuses hin gerichtet ist. Ein solcher Kragen läßt sich auf seiner Innenseite verhältnismäßig einfach durch ein verstellbares Werkzeugteil entformen, welches von der die Innenseite des Gehäuses formenden Werkzeughälfte getragen ist.

Bei einem Scheinwerfer, dessen Reflektor um eine horizontale Achse schwenkbar ist, kann der Reflektor einfach und leicht in das Gehäuse eingesetzt werden, wenn die horizontale Achse in der oberen Hälfte des Scheinwerfers verläuft und durch zwei Verbindungselemente zum Gehäuse hin gebildet ist, welche zwei selbstrastend miteinander verbindbare Teile aufweisen, da der Reflektor nach einem selbstrastenden Verbinden der oberen Hälfte des Reflektors mit dem Gehäuse mit seinem unteren Rand in das Gehäuse einschwenkbar ist, ohne an die durch einen Einzug hergestellte Blende anzustoßen.

Die durch einen Einzug hergestellte Blende kann auch zu mehreren nebeneinander angeordneten Reflektoren angrenzend verlaufen. Hierbei sollte ein verstellbarer Reflektor mit seinem vorderen Rand einen Abstand zu dem ersten bzw. zweiten Flächenabschnitt des eingezogenen äußeren Seitenwandabschnittes aufweisen, während ein ortsfester Reflektor mit seinem vorderen Rand an einem Flächenabschnitt des eingezogenen Seitenwandabschnittes anliegen kann.

Ein Ausführungsbeispiel nach der Erfindung ist in der Zeichnung dargestellt, und zwar zeigen
- Figur 1: einen mittleren horizontalen Längsschnitt durch einen Scheinwerfer für Fahrzeuge mit einer Blende, welche zwischen einer äußeren Abschlußscheibe und zwei in ein topfförmiges Gehäuse eingesetzten Reflektoren verläuft;
- Figur 2: einen Schnitt nach der Linie A-A in Figur 1 und
- Figur 3: einen um 180 Grad gedrehten Schnitt nach der Linie B-B in Figur 1.

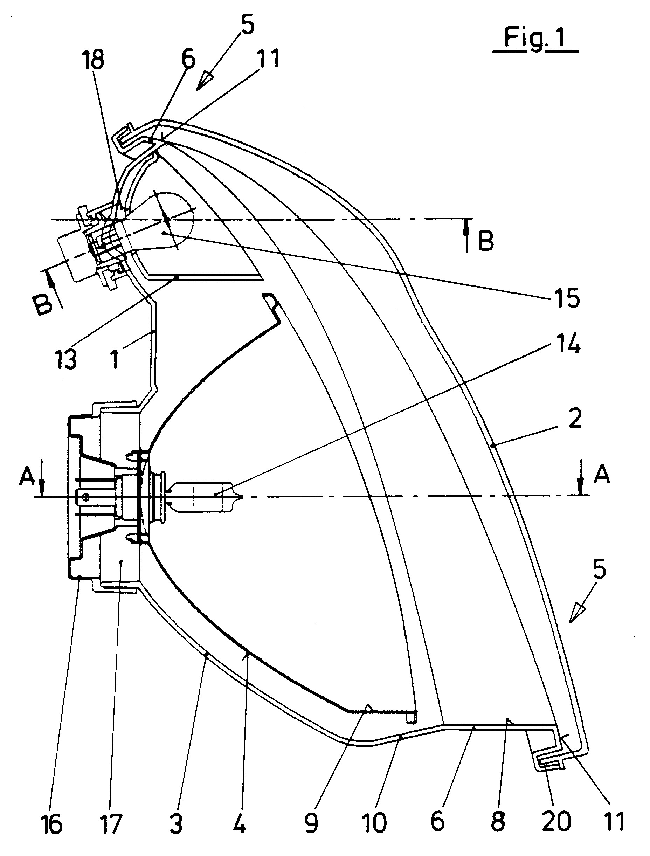

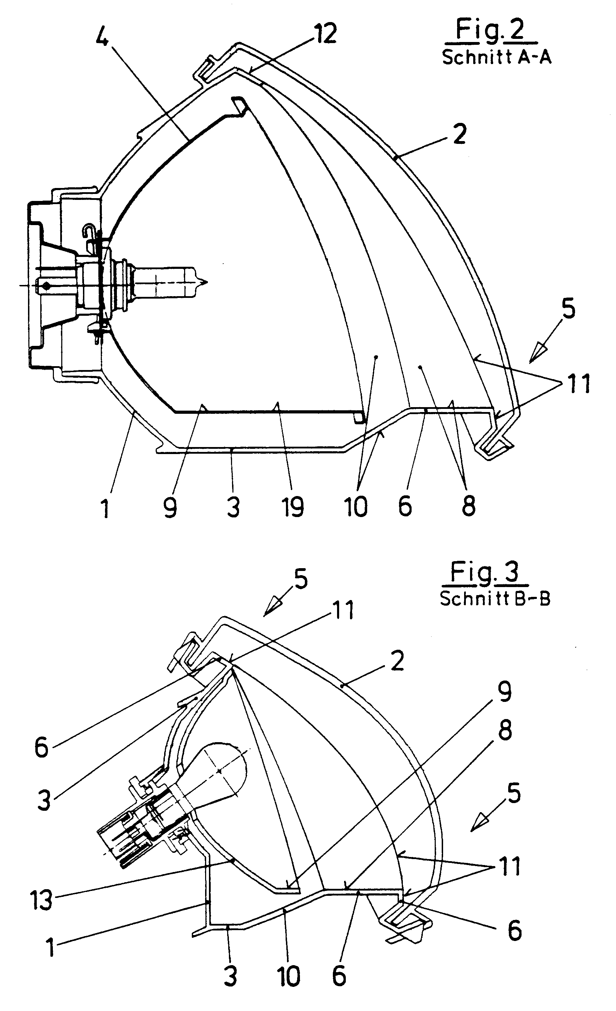

Der Scheinwerfer für Fahrzeuge weist ein aus Kunststoff hergestelltes topfförmiges Gehäuse (1) und eine auf den äußeren vorderen Rand seiner umlaufenden Seitenwand (3) aufgesetzte schalenförmige, lichtdurchlässige Abschlußscheibe (2) auf. In den von Abschlußscheibe (2) und topfförmigem Gehäuse (1) gebildeten Innenraum des Scheinwerfers ist ein verstellbarer Reflektor (4) und ein für ein Seitenlicht eines Fahrzeuges dienender ortsfester Reflektor (13) eingesetzt. Die Reflektoren (4, 13) sind seitlich nebeneinander angeordnet. Die Abschlußscheibe (2) verläuft, ausgehend von dem dem Reflektor (13) abgewandten Rand des Reflektors (4), mit ihrer Vorderseite zum ortsfesten Reflektor (4) hin in Richtung zur Rückseite des Scheinwerfers, während die Abschlußscheibe (2), ausgehend von ihrem unteren Rand, mit der Vorderseite schräg zur Rückseite des Scheinwerfers hin verläuft. Bedingt durch diesen Verlauf der Vorderseite der Abschlußscheibe (2) und somit des äußeren umlaufenden Randes des Gehäuses (1) verlaufen beide Reflektoren (4, 13) mit ihrem oberen vorderen Rand benachbart zum oberen Rand des Gehäuses, während die beiden Reflektoren (4, 13) mit ihrem unteren vorderen Rand in dem Gehäuse (1) vertieft liegend angeordnet sind und somit zwischen ihrem vorderen unteren Rand der Abschlußscheibe (2) ein sie überragender äußerer Seitenwandabschnitt (6) des Gehäuses (1) verläuft. Auch die dem verstellbaren Reflektor (4) benachbarte äußere seitliche Seitenwand (3) des Gehäuses (1) überragt mit einem äußeren Seitenwandabschnitt (6) den vorderen Rand des Reflektors (4), während der an den ortsfesten Reflektor (4) angrenzende seitliche Seitenwandabschnitt (6) des Gehäuses (1) mit ihrem vorderen Rand zum vorderen Rand des Reflektors (13) benachbart verläuft. Das topfförmige Gehäuse (1) umgibt die Reflektoren (4, 13) eng und baut somit so klein wie möglich. In die beiden schalenförmigen Reflektoren (4, 13) ist im Bereich ihres Scheitels eine Öffnung zur Aufnahme einer Lampe (14 bzw. 15) eingebracht. Die Lampe (14) ist am Reflektor (4) befestigt und ragt mit ihrem Sockel durch eine zentral liegende Öffnung einer Gummimanschette (16) hindurch, welche mit ihrem äußeren umlaufenden Rand auf den Kragen einer Gehäuseöffnung (17) aufgesetzt ist. Die für den Reflektor (13) dienende Lampe (15) ragt durch die Öffnung des Reflektors (13) hindurch und ist mit ihrem Sockel in einer Gehäuseöffnung (18) lösbar befestigt. Die Gehäuseöffnungen (17, 18) sind in ihrer Größe so ausgeführt, daß durch sie hindurch ein Lampenwechsel einfach und leicht möglich ist.

Der äußere Seitenwandabschnitt (6) des Gehäuses (1), welcher an der unteren Seite des Scheinwerfers und der dem verstellbaren Reflektor (4) benachbarten seitlichen Seite des Scheinwerfers den vorderen Rand der Reflektoren (4 bzw. 13) in Lichtaustrittsrichtung überragt, verläuft quer zur Lichtaustrittsrichtung und zur Vorderseite der Abschlußscheibe (2) zum Inneren des Scheinwerfers hin eingezogen. Dabei weist der eingezogene äußere Seitenwandabschnitt (6) im Inneren des Scheinwerfers einen annähernd parallel zur Lichtsaustrittsrichtung verlaufenden ersten Flächenabschnitt (8) auf, welcher sich bis nahe zum vorderen Rand der Reflektoren hin erstreckt und bündig zu der an ihn angrenzenden Innenfläche der Reflektoren (9, 13) verläuft. Angrenzend an den ersten Flächenabschnitt (8) weist der eingezogene Seitenwandabschnitt (6) einen zur Rückseite des Scheinwerfers hin gerichteten zweiten Flächenabschnitt (10) und einen zur Vorderseite der Abschlußscheibe (2) hin gerichteten dritten Flächenabschnitt (11) auf. Der Flächenabschnitt (10) verläuft zur Lichtaustrittsrichtung in einem zur Rückseite des Scheinwerfers hin geöffneten spitzen Winkel und liegt somit in einer durch die geöffnete Vorderseite des Gehäuses hindurchgehenden Fläche. Der verstellbare Reflektor (4) verläuft zu dem zweiten Flächenabschnitt (10) in einem geringen Abstand, während der ortsfeste Reflektor (13) mit seinem vorderen Rand an einem Flächenabschnitt (10) des Seitenwandabschnittes (6) anliegt. Der verstellbare Reflektor (4) weist eine horizontal verlaufende große untere Abflachung (19) auf, welche zusammen mit dem an ihn angrenzenden ersten Flächenabschnitt (8) des äußeren Seitenwandabschnittes (6) in einer horizontalen Ebene verläuft. Der dritte Flächenabschnitt (11) verläuft quer zum ersten Flächenabschnitt (8) des Seitenwandabschnittes (6) und verläuft bis zu dem die Abschlußscheibe (2) aufnehmenden freien Rand des äußeren Seitenwandabschnittes (6). Der äußere freie Rand des Seitenwandabschnittes (6) weist ein U-förmig gestaltetes Aufnahmebett (20) für die Abschlußscheibe (2) auf.

Die an den ortsfesten Reflektor (13) seitlich und oben angrenzende Seitenwand (3) des Gehäuses (1) verläuft mit ihrem äußeren Seitenwandabschnitt (6) ausschließlich zur Vorderseite der Abschlußscheibe (2) hin eingezogen und weist den zur Vorderseite der Abschlußscheibe (2) hin gerichteten dritten Flächenabschnitt (11) auf. Der Reflektor (13) grenzt mit seinem seitlichen und oberen vorderen Rand nahe dem dritten Flächenabschnitt (11) an den eingezogenen äußeren Seitenwandabschnitt (6) des Gehäuses (1) an.

Das Gehäuse (1) des Scheinwerfers weist oberhalb des verstellbaren Reflektors (4) einen an seinen vorderen Rand angeformten Kragen (12) auf, welcher mit seinem freien Randabschnitt zum unteren vorderen Rand des Gehäuses (1) hin weist.

### Bezugszeichenliste

### Scheinwerfer für Fahrzeuge

- 1: Gehäuse
- 2: Abschlußscheibe
- 3: Seitenwand
- 4: Reflektor
- 5: Blende
- 6: Seitenwandabschnitt
- 7: Kragen
- 8: erster Flächenabschnitt
- 9: Innenfläche
- 10: zweiter Flächenabschnitt
- 11: dritter Flächenabschnitt
- 12: vierter Flächenabschnitt
- 13: Reflektor
- 14: Lampe
- 15: Lampe
- 16: Gummimanschette
- 17: Gehäuseöffnung
- 18: Gehäuseöffnung
- 19: Abflachung
- 20: Aufnahmebett

## Patentansprüche

1. Scheinwerfer für Fahrzeuge, mit einem topfförmigen Gehäuse (1), mit einer lichtdurchlässigen Abschlußscheibe (2), welche auf den vorderen Rand der Seitenwand (3) des Gehäuses (1) aufgesetzt ist, mit einem in das topfförmige Gehäuse (1) eingesetzten Reflektor (4) und mit einer Blende (5), welche zumindest einen Teilbereich zwischen der Abschlußscheibe (2) und dem Reflektor (4) abdeckt, dadurch gekennzeichnet, daß zumindest ein Abschnitt der Blende (5) von einem zum Inneren des Scheinwerfers hin eingezogen verlaufenden äußeren Seitenwandabschnitt (6) des den Reflektor (4) aufnehmenden Gehäuses (1) gebildet ist.

2. Scheinwerfer nach Anspruch 1, dadurch gekennzeichnet, daß der Seitenwandabschnitt (6) des Gehäuses (1) quer zur Lichtaustrittsrichtung zum Inneren des Scheinwerfers hin eingezogen verläuft.

3. Scheinwerfer nach Anspruch 2, dadurch gekennzeichnet, daß der eingezogene Seitenwandabschnitt (6) mit einem zum Inneren des Scheinwerfers hin gerichteten ersten Flächenabschnitt (8) annähernd bündig in die an ihn angrenzende Innenfläche (9) des Reflektors (4) übergeht.

4. Scheinwerfer nach Anspruch 2 oder 3, dadurch gekennzeichnet, daß der eingezogene Seitenwandabschnitt (6) mit einem zum Inneren des Scheinwerfers hin gerichteten zweiten Flächenabschnitt (10) der Rückseite des Scheinwerfers zugewandt ist und in einer durch die Vorderseite des Gehäuses (1) hindurchgehenden Fläche liegt.

5. Scheinwerfer nach einem der Ansprüche 1 bis 4, dadurch gekennzeichnet, daß der äußere Seitenwandabschnitt (6) des den Reflektor (4) aufnehmenden Gehäuses (1) zur Vorderseite der Abschlußscheibe (2) hin eingezogen verläuft und einen zur Vorderseite des Scheinwerfers hin gerichteten dritten Flächenabschnitt (11) aufweist.

6. Scheinwerfer nach Anspruch 5, dadurch gekennzeichnet, daß der dritte Flächenabschnitt (11) bündig in einen vierten Flächenabschnitt (12) eines an den vorderen Rand der Seitenwand des Gehäuses (1) angeformten Kragens (7) übergeht.

7. Scheinwerfer nach einem der Ansprüche 1 bis 6, dadurch gekennzeichnet, daß die untere und/oder zumindest eine seitliche Seitenwand (3) des Gehäuses (1) den eingezogenen äußeren Seitenwandabschnitt (6) aufweist.

8. Scheinwerfer, bei welchem der Reflektor (4) um eine horizontale Achse schwenkbar ist, nach Anspruch 7, dadurch gekennzeichnet, daß die horizontale Achse in der oberen Hälfte des Scheinwerfers verläuft und durch zwei Verbindungselemente zum Gehäuse hin gebildet ist, welche zwei selbstrastend miteinander verbindbare Teile aufweisen.

9. Scheinwerfer nach einem der Ansprüche 6 bis 8, dadurch gekennzeichnet, daß der Kragen (7) mit seinem freien Randabschnitt auf den gegenüberliegenden freien Rand des Gehäuses (1) gerichtet ist.

10. Scheinwerfer mit mehreren Reflektoren, nach einem der Ansprüche 1 bis 9, dadurch gekennzeichnet, daß der eingezogene äußere Seitenwandabschnitt (6) zu mehreren Reflektoren (4, 13) angrenzend verläuft.
